# EUROPEAN PATENT APPLICATION

(11) **EP 3 651 108 A1**
(43) Date of publication of application: **13.05.2020**
(21) Application number: 19207831.9
(22) Date of filing: 07.11.2019
(51) Int. Cl.: G06Q 30/06

(54) **SYSTEMS AND METHODS FOR ELECTRONICALLY ACCEPTING AND TRANSMITTING PURCHASE ORDER ON AN ONLINE PLATFORM**

(30) Priority: 09.11.2018 US 201862758280 P; 03.09.2019 US 201916558831
(71) Applicant: Honeywell International Inc., Morris Plains, NJ 07950 (US)
(72) Inventor: BUTTERS, Lisa Estipona, Morris Plains, NJ 07950 (US); SOLIS, Matthew, Morris Plains, NJ 07950 (US); MINYARD, Jason, Morris Plains, NJ 07950 (US); DINGMAN, Jeremy, Morris Plains, NJ 07950 (US); HUMPHERYS, Grant, Morris Plains, NJ 07950 (US); DOTY, Keith, Morris Plains, NJ 07950 (US); SUITS, Kevin, Morris Plains, NJ 07950 (US); DAVIS, Emily, Morris Plains, NJ 07950 (US); SASEENDRAN, Saji, Morris Plains, NJ 07950 (US)
(74) Representative: Haseltine Lake Kempner LLP

(57) **Abstract**

Disclosed are methods, systems, and non-transitory computer-readable medium for executing document uploads in an electronic transaction platform. For example, a method may include receiving, by one or more processors, from a first user interface, a purchase order (PO) input, wherein the PO input comprises at least one of a PO identifier and a PO document file; determining, by the one or more processors, that a transaction has been completed in the electronic transaction platform, wherein the transaction is associated with the PO input; in response to the determining that the transaction has been completed, generating, by the one or more processors, a set of PO data based on the PO input; and transmitting, by the one or more processors, the set of PO data to a second user interface associated with the transaction.

## Description

### TECHNICAL FIELD

Various embodiments of the present disclosure generally relate to accepting and transmitting a purchase order electronically, and more particularly, to transmitting data in an electronic transactions platform by accepting, retrieving, and communicating a purchase order document data in an automated process.

### BACKGROUND

Purchase orders are commonly used documents in commercial transactions. During a purchase transaction, a buyer may present, or be required to present, the seller with a purchase order (PO), as a document serving as an official offer letter. A purchase order may also serve various additional roles, such as a clear communication of a party's intentions to purchase, and/or a standardized form to help manage different orders. In doing so, purchase order may lay out the terms of a proposed purchase (e.g., customer name, part identifiers, quantity, etc.). Use of purchase orders may generally be more prevalent in business-to-business (B2B) transactions than it is in other types of commerce, because standardized and/or formalized documents may tend to be more beneficial or necessary for business entities than they may be for individual consumers. In the world of electronic commerce (e-commerce), however, many platforms existing today do not have any embedded function to allow customers to input a purchase order when they place an order, even if they often accommodate B2B transactions. A reason for this may be that e-commerce platforms commonly or primarily involve transactions with consumers (e.g., B2C or C2C transactions), in which the parties (e.g., individual consumers) may be more concerned about completing the purchase process as conveniently as possible, than about handling formal documents.

Nonetheless, e-commerce platforms do attract business entities, which are already accustomed to providing a purchase order in their commercial transactions. For example, in an online marketplace for buying and selling equipment, such as vehicle or aerospace or aircraft parts, buyers of the parts may be manufacturers or business entities with an interest in procuring equipment in a formalized manner. Thus, for e-commerce platforms which may need to accommodate B2B transactions, there is a need for a functionality in which buyers can input their purchase order (PO) number(s) and PO document(s) and/or any other information stored in the PO document to be transmitted to the seller(s) or other interested parties.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods disclosed relate to uploading and communicating an electronic purchase order in an online platform for electronic transactions of equipment, such as vehicle parts.

In one embodiment, a computer-implemented method is disclosed for executing document uploads in an electronic transaction platform. The computer-implemented method may comprise: receiving, by one or more processors, from a first user interface, a purchase order (PO) input, wherein the PO input comprises at least one of a PO identifier and a PO document file; determining, by the one or more processors, that a transaction has been completed in the electronic transaction platform, wherein the transaction is associated with the PO input; in response to the determining that the transaction has been completed, generating, by the one or more processors, a set of PO data based on the PO input; and transmitting, by the one or more processors, the set of PO data to a second user interface associated with the transaction.

In accordance with another embodiment, a computer system is disclosed for executing document uploads in an electronic transaction platform. The computer system may comprise: a memory having processor-readable instructions stored therein; and at least one processor configured to access the memory and execute the processor-readable instructions, which when executed by the at least one processor configures the at least one processor to perform a plurality of functions, including functions for: receiving from a first user interface, a purchase order (PO) input, wherein the PO input comprises at least one of a PO identifier and a PO document file; determining that a transaction has been completed in the electronic transaction platform, wherein the transaction is associated with the PO input; in response to the determining that the transaction has been completed, generating a set of PO data based on the PO input; and transmitting the set of PO data to a second user interface associated with the transaction.

In accordance with another embodiment, a non-transitory computer-readable medium containing instructions is disclosed for executing document uploads in an electronic transaction platform. The non-transitory computer-readable medium may comprise instructions for: receiving from a first user interface, a purchase order (PO) input, wherein the PO input comprises at least one of a PO identifier and a PO document file; determining that a transaction has been completed in the electronic transaction platform, wherein the transaction is associated with the PO input; in response to the determining that the transaction has been completed, generating a set of PO data based on the PO input; and transmitting the set of PO data to a second user interface associated with the transaction.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an example environment in which methods, systems, and other aspects of the present disclosure may be implemented.
FIG. 2 depicts a simplified screen shot of an exemplary buyer interface provided at a payment selection step, according to one or more embodiments.
FIG. 3 depicts a simplified screen shot of an exemplary buyer interface provided at a checkout step of a transaction, according to one or more embodiments.
FIG. 4 depicts a flowchart of an exemplary method for executing document uploads in an electronic transaction platform, according to one or more embodiments.

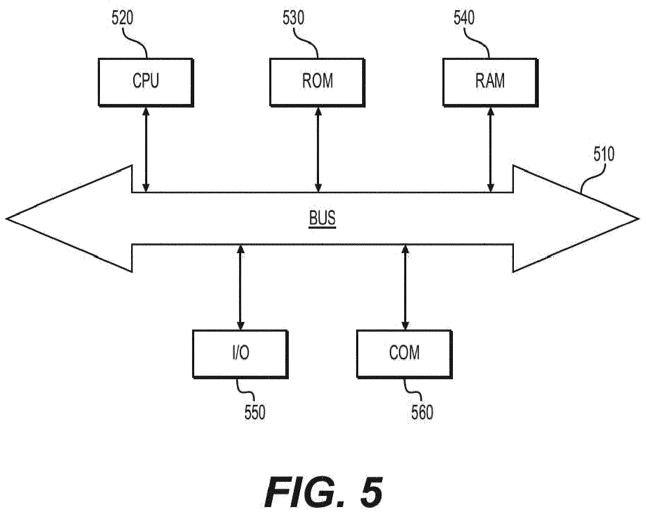

FIG. 5 depicts an exemplary computer device or system, in which embodiments of the present disclosure, or portions thereof, may be implemented.

### DETAILED DESCRIPTION

The following embodiments describe methods and systems for uploading and communicating an electronic purchase order in an online platform for electronic transactions of equipment, such as vehicle parts. As described above, there is a need for a functionality at e-commerce marketplace platforms, such as aerospace or vehicle parts marketplace, in which buyers can input their purchase order (PO) number(s) and/or PO document(s), along with any other information stored in the PO document, to be transmitted to seller(s) and/or other interested parties. As described in more detail below, such input and communication capabilities can be achieved by receiving from a first user interface, a purchase order (PO) input, wherein the PO input comprises at least one of a PO identifier and a PO document file, determining that a transaction has been completed in the electronic transaction platform, generating a set of PO data based on the PO input; and transmitting the set of PO data to a second user interface associated with the transaction.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. For example, equipment, as used herein throughout the present disclosure, may include products or services traded in primary and secondary marketplaces among organizations. As such, equipment may include, for example, aircraft, aerospace parts and components, time-constrained equipment/services such as airline gates or airport runways, or any other aerospace-related product or service traded among airlines, airports, aircraft, or aerospace original equipment manufacturers (OEMs). While the exemplary equipment online marketplace platform of the present disclosure relates to aerospace-related equipment, equipment may also include any other type of vehicles, vehicle parts and components, vehicle services, heavy equipment, heavy equipment parts and components, heavy equipment services, computing devices, computing device parts and components, computing device services, or any other products or services traded between businesses and individuals through primary and secondary marketplaces.

Certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

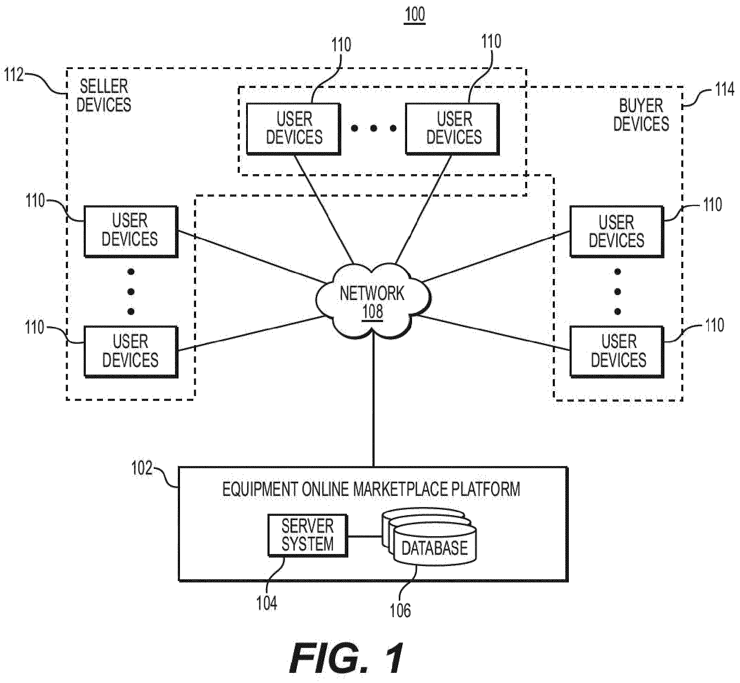

Referring now to the appended drawings, FIG. 1 depicts a block diagram of a system 100 for an equipment online marketplace, according to aspects of the disclosure. As shown in FIG. 1, the system 100 for an equipment online marketplace may include an equipment online marketplace platform 102, such as an aerospace parts online marketplace platform, including server systems 104 and electronic databases 106. The server systems 104 may store and execute the equipment online marketplace platform 102 for use through a network 108, such as the Internet. The equipment online marketplace platform 102 may be implemented through one or more server systems 104, such as an application program interface (API) server, web page servers, image servers, listing servers, processing servers, search servers, or other types of front-end or back-end servers.

Users may access the equipment online marketplace through the network 108 by user devices 110, such as a computing device or the like. User devices 110 may allow a user to display a web browser for accessing the equipment online marketplace from the server system 104 through the network 108. The user devices 110 may be any type of device for accessing web pages, such as personal computing device, mobile computing devices, or the like. User devices 110 may be seller devices 112 or buyer devices 114. As such, users may be sellers and/or buyers through the equipment online marketplace. As further shown in FIG. 1, in some cases, user devices 110 may be both seller devices 112 and buyer devices 114. Thus, users may access the equipment online marketplace as both sellers and buyers.

Further, the equipment online marketplace may include a seller interface and a buyer interface. In some implementations, the buyer interface may be referred to as the first user interface, and the seller interface may be referred to as the second user interface. The seller interface may be displayed to a user accessing the equipment online marketplace as a seller on a user device 110. The seller interface may, for example, include features to enable a seller to enter, or input, the information of the vehicle, aerospace, or equipment part that the seller desires to sell through the equipment online marketplace. For example, the seller interface may allow a seller to create, edit, or delete equipment listings based on the information of a corresponding vehicle, aerospace, or equipment part. The buyer interface may be displayed to a user accessing the equipment online marketplace as a buyer on a user device 110. The buyer interface may include features to enable a buyer to search for, select, and/or purchase equipment from an equipment listing created by a seller. As discussed above, the equipment online marketplace may facilitate equipment purchase transactions using various features, as further described below.

As indicated above, FIG. 1 is provided merely as an example. Other examples are possible and may differ from system 100 of FIG. 1. In addition, the number and arrangement of devices and networks shown in system 100 are provided as an example. In practice, there may be additional devices, fewer devices and/or networks, different devices and/or networks, or differently arranged devices and/or networks than those shown in system 100. Furthermore, two or more devices shown in FIG. 1 may be implemented within a single device, or a single device shown in FIG. 1 may be implemented as multiple, distributed devices. Additionally, or alternatively, one or more user devices in system 100 may perform one or more functions of the server system 104 and/or the equipment online marketplace platform 102.

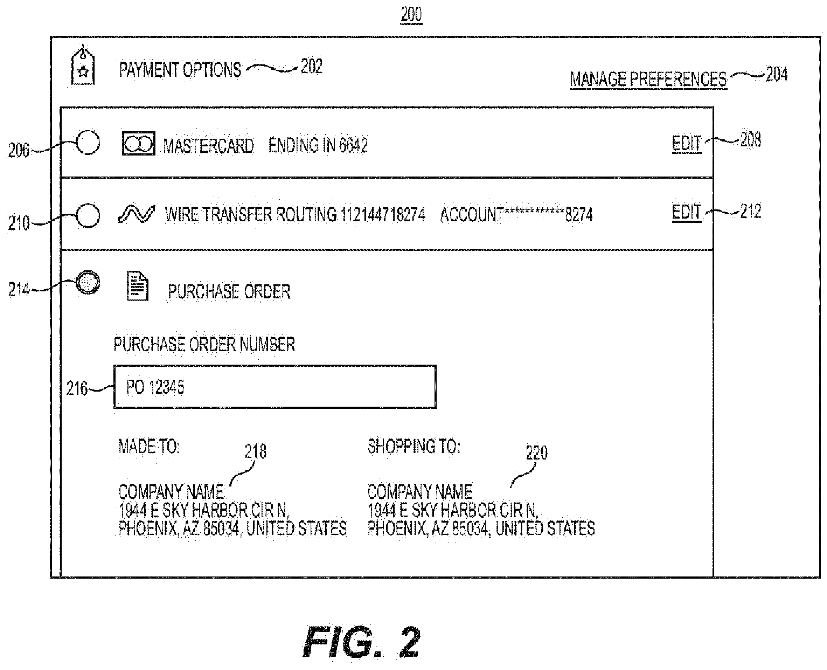

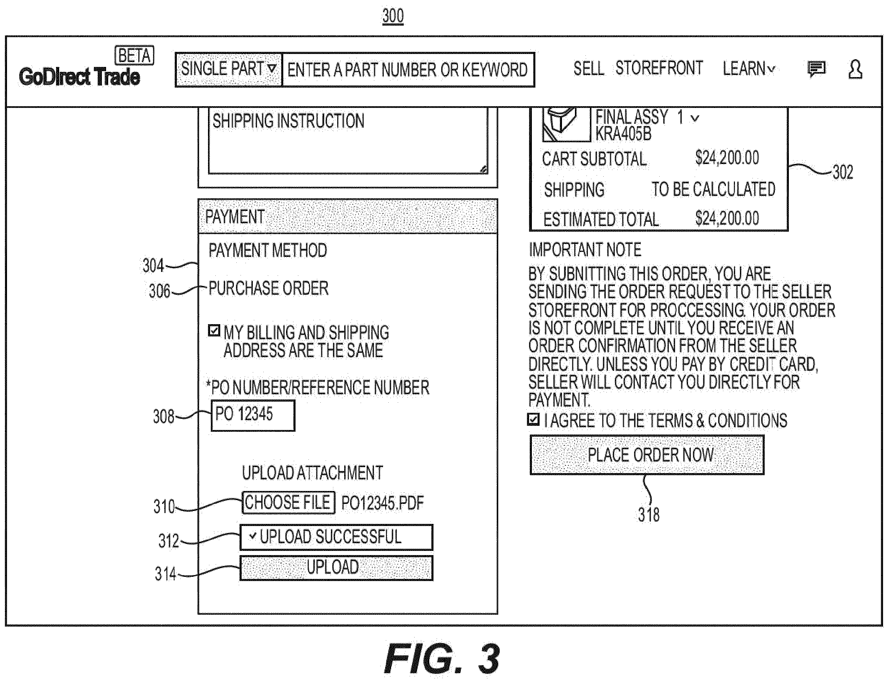

FIG. 2 depicts a simplified screen shot of an exemplary buyer interface 200 provided at a payment selection step, according to one or more embodiments. In some implementations, the exemplary interface 200 may be provided to a user between an item selection phase (e.g., adding items to a virtual shopping cart) and a final check-out phase (e.g., finalizing a transaction at interface 300 of FIG 3) of a transaction. Additionally, or alternatively, the exemplary interface 200 may be provided to a user as an embedded web tool, a web application, a widget, a pop-up window, or any other type of an interactive feature, within a final check-out interface (e.g., interface 300 of FIG. 3) or any other interface provided by the equipment online marketplace platform 102 to a user prior to completing the transaction.

The exemplary interface 200 may present payment options 202 for a user, such as a credit card option 206, a wire transfer option 210, and/or a PO option 214. While credit card and wire transfer are options displayed in FIG. 2, these payment methods are shown only as an exemplary illustration, and various other payment methods, such as debit card, online payment account of a financial institution, fund transfer using a third party payment processing service, mobile pay, or any payment method capable of electronic processing may be included among the payment options 202 in the buyer interface. The exemplary interface 200 may also present a manage preferences link 204, through which the user may enter and set preference values. Preference values may be default account numbers for credit card option 206 or wire transfer option 210, default recipient address 218 and shipping address 220 for the PO option 214, and/or any other text which may be stored in advance to facilitate a user with data entry in the exemplary interface 200. For payment options with editable account data, (e.g., payment options 206 and 210), the exemplary interface 200 may present edit hyperlinks 208 and 212, through which the user may enter and edit the account data corresponding to the respective payment method.

As shown, the exemplary interface 200 may be configured in such a way that only one option may be selected among the credit card option 206, the wire transfer option 210, and/or the PO 214, using a radio button. Additionally, or alternatively, a user may first select one of the payment options 206 and 210 for payment, and also be prompted with an option to upload a PO input (e.g., PO identifier and/or PO document) in a subsequent phase of the transaction (e.g., interface 300 of FIG. 3) as a backup documentation associated with the transaction.

If the PO 214 is selected in the exemplary interface 200 as the mode of payment, the user may also be presented with a text field 216 at which the user may enter one or more PO identifiers. If the user enters one or more PO identifiers in the text field 216, the equipment online marketplace platform 102 may store the one or more PO identifiers in association with the ongoing transaction, in at least one of the server system 104 and the database 106.

As indicated above, FIG. 2 is provided merely as an example interface. Other examples (e.g., differently arranged interface) are possible and may differ in arrangement, form, or design from what was described with regard to FIG. 2.

FIG. 3 depicts a simplified screen shot of an exemplary buyer interface 300 provided at a checkout step of a transaction, according to one or more embodiments. The exemplary interface 300 may, for example, be displayed to a user (e.g., a buyer) at a user device 110 at the final check-out step, in which items in the virtual shopping cart 302 is shown in its completed form (e.g., with subtotal, total, and/or estimated total displayed) and the user is given an option to complete the transaction via pressing a transaction finalizing button 318. The exemplary interface 300 may display a payment management feature 304, in order to confirm, manage, and/or modify payment methods necessary for completing the transaction. For example, if a user selected the credit card option 206 in a previous step (e.g., interface 200 of FIG. 2), the payment management feature 304 may display the credit card payment transaction detail (e.g., account data, billing address, and/or shipping address) for user confirmation. While FIG. 3 depicts an inclusion of the payment management feature 304 in the exemplary buyer interface 300 as an exemplary illustration, the payment management feature 304 may be configured to display at one or more interfaces at any stage of a transaction on the equipment online marketplace platform 102.

The exemplary interface 300 may additionally allow users to check out using a PO input as the designated payment method, because a PO, in certain types of transactions (e.g., B2B transaction of equipment parts) may serve as an offer from a buyer, which necessitates its own payment and/or invoicing process arising from the acceptance of the PO. As used herein, a PO input may be a term which collectively refers to a user-provided input of PO identifier(s) and/or a PO document(s). Thus, if the server system 104 determines that a PO input has been selected as the payment method (e.g., by detecting a user selection 214 made in exemplary interface 200 shown in FIG. 2), the payment management feature 304 may be configured to display options relating specifically to a PO input. For example, the payment management feature 304 may display "purchase order" as an indication 306 confirming the selected payment method, and prompt a user for a PO input, such as a PO identifier and/or a PO document file.

Because a PO input may be a PO identifier and/or a PO document file, the payment management feature 304 may display both a PO identifier input feature 308 and a PO document upload feature 310. The PO identifier input feature 308 may be a modifiable text field pre-filled with a previously entered PO identifier (e.g., PO identifier "PO 12345" entered in exemplary interface 200 as illustrated in FIG. 2), such that a user may modify or confirm this pre-filled data. Additionally, or alternatively, the PO identifier input feature 308 may comprise any mechanism or widget by which a user can enter the PO identifier. For example, to enter the PO identifier, the user may use an input device associated with the user device 110, such as a mouse, a keyboard, a virtual keyboard, a microphone, stylus, a touchscreen, or any other input device associated with the user device 110.

The PO document file upload feature 310 may comprise any mechanism or widget by which a user can transmit a PO document to the equipment online marketplace platform 102. For example, the upload feature may be linked to a file directory or storage database associated with user device 110, which includes a listing of files stored on user device 110 that are available for uploading to the equipment online marketplace platform 102. In response to a user initiation at the PO document file upload feature 310 (e.g., click or touch on the button), the buyer interface (e.g., in the payment management feature 304) may allow a user to search for files in the file directory associated with the user device 110 (e.g., local hard drive of the user device 110) and select one or more of the files for uploading to the equipment online marketplace platform 102. Additionally, or alternatively, the buyer interface may provide a drag-and-drop widget that allows a user to select one or more files in the file directory associated with the user device 110 (e.g., local hard drive of the user device 110), and drag the one or more files to the widget in the buyer interface to communicate a selection of one or more PO document files. In this way, the one or more processors of the server system 104 and/or a user device 110 may detect that the one or more PO document files have been dragged and dropped to a widget in the buyer interface. After one or more PO document files have been received at the equipment online marketplace platform 102, the buyer interface may display identifiers of the one or more received PO documents, (e.g., "P012345.PDF" as shown next to the PO document upload feature 310), as an assurance that certain files have been received.

In response to the file selection(s), the file transmissions may be triggered automatically. Additionally, or alternatively, after the one or more PO document files for upload have been selected, a user may press an upload button 314, which triggers one or more file transmissions to the equipment online marketplace platform 102. In this way, the one or more processors of the server system 104 and/or a user device 110 may receive a user selection of one or more PO document files at the one or more file directories, identify the one or more PO document files as the PO document file, and receive the identified PO document file at the equipment online marketplace platform 102. If a particular upload operation (e.g., in response to pressing of the upload button 314) is completed successfully, the buyer interface (e.g., in the payment management feature 304) may display an acknowledgement 312 of a successful upload.

A PO input may comprise one PO identifier and/or one PO document file. Additionally, or alternatively, a PO input for a particular transaction may comprise a plurality of PO identifiers and/or a plurality of PO document files. For example, a user may be purchasing, e.g., fifteen (15) different aerospace vehicle parts on the equipment online marketplace platform 102 from a third party seller, with one PO document identified as 1A and listing, e.g., ten (10) parts, and another PO document identified as 1B and listing, e.g., five (5) parts. This exemplary user may be permitted to upload PO document files 1A and 1B as separate attachments, each document file having its respective PO identifier and PO item list. Additionally, or alternatively, the user may choose to provide two PO identifiers 1A and 1B, and make alternative arrangements to provide the actual PO document (e.g., PO management software, a PO exchange portal, electronic mail, or postal mail).

The one or more PO documents uploaded in the PO document upload feature can be in a text file format, an image file format, or a file format that accommodates a combination thereof (e.g., PDF, tiff, jpg, jpeg, PNG, etc.). After one or more PO documents are uploaded in the user's original format, the one or more server systems 104 may retrieve pertinent data from the one or more PO documents, and transmit the pertinent data about the PO documents to one or more sellers associated with the uploaded PO documents. In some implementations, the pertinent information from a PO document may be the entire PO document itself. Additionally, or alternatively, the retrieving of pertinent data may be performed by extracting relevant texts and/or images from the uploaded PO document. For example, particular attributes such as customer name, part identifier, quantity, price, shipping address, billing address, or purchase order identifier may be extracted from the uploaded PO document using optical character recognition (OCR), image retrieval, text retrieval, a conversion of a machine readable code (e.g., barcode, QR code, or 3-D barcode converted to texts), encryption, decryption, compression, decompression, or any other file conversion process by which texts can be retrieved from a machine readable document or image files. The pertinent data may also be any attribute pertinent or relevant to the PO input, such as an attribute associated with identifying or describing each customer, identifying or describing each item being purchased or sought to be purchased, and/or identifying or describing each seller. For example, the pertinent data may be the one or more PO identifiers received from a user (e.g., a buyer) in association with the ongoing transaction (e.g., at field 216 of FIG. 2 or field 308 of FIG. 3).

The retrieved pertinent data may be communicated to the one or more sellers associated with the transaction and the PO input. As used herein, a "seller" may include a third party seller at the e-commerce platform, or a direct seller at the equipment online marketplace platform 102. Presenting the information may be performed in various ways. For example, the pertinent data may be transmitted to the seller interface, a seller device 110, or any online data communication interface accessible by seller device 112. Additionally, the pertinent data may be presented in a default format, in a customized format, in a format preferred by the sellers or the buyers (e.g., preset values in user preferences), and/or in a format that organizes each attribute in separate fields (e.g., customer name, part identifier, quantity, price, shipping address, billing address, purchase order identifier). If a transaction involves a plurality of sellers, the pertinent data may be presented to some or all of the plurality of sellers.

Being able to retrieve and communicate information from a buyer-provided PO provides significant advantages. For example, the buyers may already have an existing operation in place to exchange purchase orders using PO documents of certain format, style, template, or contents. By allowing a buyer to upload any information and/or documents they have, the equipment online marketplace platform 102 may accept the PO documents in the buyer's original file format, and may automatically deliver selective and pertinent information to the seller, in a way that caters to the seller's device and the seller's settings regardless of the PO's original format. Such acceptance, selective retrieval, and customized communication process also enables the overall platform to provide a solution that uniquely addresses a technical problem arising in file transmission technology between devices of different platforms, by accepting a file of a first format from the origin, making compatibility-based file conversions, and automatically enabling a recipient to view the file in a different, recipient-friendly format, thereby resolving the problem of recipient being unable to effectively view the file based on compatibility issues.

As indicated above, FIG. 3 is provided merely as an example interface. Other examples (e.g., differently arranged interface) are possible and may differ in arrangement, form, or design from what was described with regard to FIG. 3.

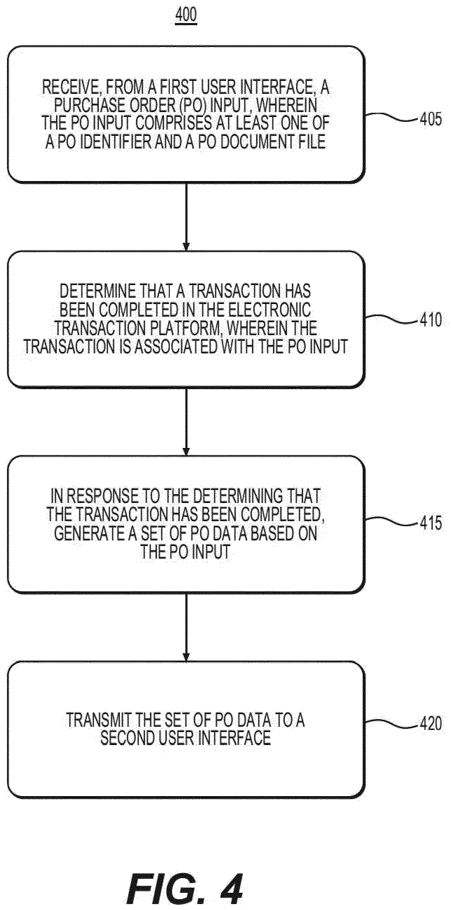

FIG. 4 depicts a flowchart of an exemplary method 400 for executing document uploads in an electronic transaction platform, according to one or more embodiments. In the exemplary method 400, one or more computer processors may receive, from a first user interface, a purchase order (PO) input, wherein the PO input comprises at least one of a PO identifier and a PO document file (Step 405). The one or more computer processors may then determine that a transaction has been completed in the electronic transaction platform, wherein the transaction is associated with the PO input (Step 410). In response to the determining that the transaction has been completed, the one or more computer processors may generate a set of PO data based on the PO input (Step 415). Then, the one or more computer processors may transmit the set of PO data to a second user interface (Step 420).

Although FIG. 4 shows example blocks of process 400, in some implementations, process 400 may include additional blocks, fewer blocks, different blocks, or differently arranged blocks than those depicted in FIG. 4. Additionally, or alternatively, two or more of the blocks of process 400 may be performed in parallel.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments of the present disclosure, as described above in the examples of FIGS. 1-4 may be implemented using a processor device. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

A device used for accessing the equipment online marketplace platform, such as user device 110 or the server system 104, may include a central processing unit (CPU). CPU may be any type of processor device including, for example, any type of special purpose or a general-purpose microprocessor device. As will be appreciated by persons skilled in the relevant art, CPU also may be a single processor in a multi-core/multiprocessor system, such system operating alone, or in a cluster of computing devices operating in a cluster or server farm. CPU may be connected to a data communication infrastructure, for example, a bus, message queue, network, or multi-core message-passing scheme.

A device used for accessing the equipment online marketplace platform, such as user device 110 or the server system 104, may also include a main memory, for example, random access memory (RAM), and may also include a secondary memory 630. Secondary memory, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory may include other similar means for allowing computer programs or other instructions to be loaded into device. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device.

A device used for accessing the equipment online marketplace platform, such as user device 110 or the server system 104, may also include a communications interface ("COM"). Communications interface allows software and data to be transferred between device and external devices. Communications interface may include a modem, a network interface (such as an Ethernet card), a communications port, a PCMCIA slot and card, or the like. Software and data transferred via communications interface may be in the form of signals, which may be electronic, electromagnetic, optical, or other signals capable of being received by communications interface. These signals may be provided to communications interface via a communications path of device, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. A device used for accessing the equipment online marketplace platform also may include input and output ports to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for executing document uploads in an electronic transaction platform, the method comprising:
receiving, by one or more processors, from a first user interface, a purchase order (PO) input, wherein the PO input comprises at least one of a PO identifier and a PO document file;
determining, by the one or more processors, that a transaction has been completed in the electronic transaction platform, wherein the transaction is associated with the PO input;
in response to the determining that the transaction has been completed, generating, by the one or more processors, a set of PO data based on the PO input; and
transmitting, by the one or more processors, the set of PO data to a second user interface associated with the transaction.

2. The method of claim 1, wherein the PO input comprises the PO identifier and the PO document file.

3. The method of claim 2, wherein the receiving the PO document file further comprises:
opening, by the one or more processors, one or more file directories, wherein the one or more file directories are in communication with a device displaying the first user interface;
receiving, by the one or more processors, a user selection of one or more files at the one or more file directories, from the first user interface;
identifying, by the one or more processors, the one or more files as the PO document file; and
receiving, by the one or more processors, the identified PO document file.

4. The method of claim 3, wherein the receiving of the user selection of the one or more files further comprises:
detecting, by the one or more processors, that the one or more files have been dragged and dropped to a widget in the first user interface.

5. The method of claim 2, wherein the generating the set of PO data based on the PO input further comprises:
retrieving, by the one or more processors, pertinent data from the PO document file, wherein the pertinent data are associated with one or more vehicle or aerospace parts, and
wherein the transaction indicates a purchase of the one or more vehicle or aerospace parts.

6. The method of claim 5, wherein the retrieving the pertinent data from the PO document file further comprises at least one of: extracting relevant texts from PO document file based on predetermined attributes, extracting images from the PO document file, extracting relevant texts by running an optical character recognition of the PO document file, converting a machine-readable code in the PO document file into text attributes, decrypting the PO document file, and decompressing the PO document file.

7. The method of claim 6, wherein the set of PO data is determined based on the retrieved pertinent data, and wherein the set of PO data comprises customer name, part identifier, quantity, price, shipping address, billing address, and/or purchase order identifier.

8. The method of any preceding claim, wherein the receiving the PO input is performed in response to a user selecting a payment method, wherein the payment method selected by the user indicates payment by the PO input.

9. A computer system for executing document uploads in an electronic transaction platform, the computer system comprising:
a memory having processor-readable instructions stored therein; and
at least one processor configured to access the memory and execute the processor-readable instructions, which when executed by the at least one processor configures the at least one processor to perform a plurality of functions, including functions for:
receiving from a first user interface, a purchase order (PO) input, wherein the PO input comprises at least one of a PO identifier and a PO document file;
determining that a transaction has been completed in the electronic transaction platform, wherein the transaction is associated with the PO input;
in response to the determining that the transaction has been completed, generating a set of PO data based on the PO input; and
transmitting the set of PO data to a second user interface associated with the transaction.

10. The system of claim 9, wherein the PO input comprises the PO identifier and the PO document file
